(19) Europäisches Patentamt
European Patent Office
Office européen des brevets

(11) **EP 0 856 726 B1**

(12) **EUROPÄISCHE PATENTSCHRIFT**

(45) Veröffentlichungstag und Bekanntmachung des Hinweises auf die Patenterteilung:
**19.09.2001   Patentblatt 2001/38**

(51) Int Cl.[7]: **G01L 1/26**, G01L 9/04, H01L 29/84, G01D 3/00, H03M 1/00

(21) Anmeldenummer: **98100497.1**

(22) Anmeldetag: **14.01.1998**

(54) **Verfahren zur Temperaturkompensation bei Messsystemen**

Method of temperature compensation in mesuring systems

Metode de compensation de la température dans les systèmes de mesure

(84) Benannte Vertragsstaaten:
**DE ES FR GB IT SE**

(30) Priorität: **30.01.1997   DE 19703359**

(43) Veröffentlichungstag der Anmeldung:
**05.08.1998   Patentblatt 1998/32**

(73) Patentinhaber: **TEMIC TELEFUNKEN microelectronic GmbH**
**90411 Nürnberg (DE)**

(72) Erfinder: **Pöppel, Josef, Dr.**
**85296 Fahlenbach (DE)**

(74) Vertreter: **Maute, Hans-Jürgen, Dipl.-Ing.**
**TEMIC TELEFUNKEN microelectronic GmbH**
**Postfach 35 35**
**74025 Heilbronn (DE)**

(56) Entgegenhaltungen:
**US-A- 4 651 292**

• **PATENT ABSTRACTS OF JAPAN vol. 016, no. 200 (E-1201), 13.Mai 1992 & JP 04 030478 A (MITSUBISHI ELECTRIC CORP), 3.Februar 1992,**
• **PATENT ABSTRACTS OF JAPAN vol. 016, no. 142 (E-1187), 9.April 1992 & JP 04 002170 A (MITSUBISHI ELECTRIC CORP), 7.Januar 1992,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Temperaturkompensation bei Meßsystemen gemäß dem Oberbegriff des Patentanspruchs 1.

Zahlreiche Meßsysteme wie beispielsweise ein Extinktionssensor in der Waschmaschine, eine Lichtschranke in Geldautomaten oder Drucksensoren im Kraftfahrzeug, beinhalten temperaturempfindliche Komponenten, die sich bei unterschiedlichen Temperaturen unterschiedlich verhalten. Insbesondere in Massengütern wie Haushaltsgeräten oder Kraftfahrzeugen werden aus Kostengründen einfache temperaturabhängige Komponenten verwendet, welche eine hohe Temperaturempfindlichkeit aufweisen. Für diese Anwendungen sind einfache Kalibrier- bzw. Kompensationsverfahren erforderlich, welche kostengünstig am besten von der im Gerät vorhandenen Mikroprozessorsteuerung selbst durchgeführt werden können. In bekannten Systemen werden zur Temperaturkompensation entweder die Einzelteile oder das Gesamtsystem bezüglich der Temperaturempfindlichkeit gegenüber der Meßgröße gemessen und in vielfältiger Weise gespeichert (Tabellenwert, Selektion, EEPROM, etc.). Beim späteren Einsatz in den Geräten können die ermittelten Werte verrechnet werden, wenn zugleich die Umgebungstemperatur erfaßt wird. In der Regel wird hierbei für die temperaturempfindliche Komponente ein typischer oder sogar ein spezifischer Wert abgespeichert und der weiteren Berechnung zugrunde gelegt. Die Methode zur Messung der spezifischen Temperaturempfindlichkeit besteht darin, den Temperaturkoeffizienten jeder einzelnen temperaturempfindlichen Komponente zu messen bevor das Gerät bzw. die Meßvorrichtung betrieben wird. Dabei wird die Komponente durch eine separate Heizung erwärmt und die bei den unterschiedlichen Temperaturen erzielten Ergebnisse als Temperaturkoeffizient, als Kennlinie oder als Wertepaare abgespeichert.

Als sehr kostengünstig erweist es sich jedoch die typische Temperaturempfindlichkeit, wie sie von den Herstellern solcher temperaturempfindlichen Bauteile angegeben werden, bei den weiteren Berechnungen zur Temperaturkompensation zugrunde zu legen.

Ein anderes Verfahren zur Temperaturkompensation besteht darin, daß die temperaturempfindliche Komponente, die Meßvorrichtung oder sogar das ganze Gerät auf eine feste Betriebstemperatur zu erwärmen, wobei diese Betriebstemperatur immer höher ist als die eventuell auftretende Umgebungstemperatur. Diese Erwärmung auf die fest definierte Betriebstemperatur erfolgt durch eine Heizvorrichtung. Diese Heizvorrichtung dient ausschließlich der Erwärmung und hat für die weiteren Messungen oder das Gerät selbst keine weitere Funktion, wie es zum Beispiel bei beheizten Schwingquarzen der Fall ist.

**Nachteilig** an diesen Verfahren ist jedoch, daß sich bei der Messung der Temperaturempfindlichkeit bei jedem einzelnen Meßsystem die Produktionszeiten für das Meßsystem bei externem Beheizen wegen der großen thermischen Zeitkonstanten enorm verlängern. Alle hier beschriebenen Verfahren sind entweder sehr teuer, sehr ungenau oder sehr aufwendig und das Langzeitverhalten der temperaturempfindlichen Komponenten wird nicht berücksichtigt. Auch werden hierfür externe Bauteile benötigt, die nur wegen Ihrer Heizfähigkeit zusätzlich im Gerät plaziert werden müssen.

Der Erfindung liegt daher die **Aufgabe** zugrunde ein Verfahren aufzuzeigen, welches kostengünstig realisierbar ist, eine hohe Genauigkeit auch bei billigen temperaturempfindlichen Komponenten aufweist und deren Langzeitverhalten mitberücksichtigt

Diese Aufgabe wird erfindungsgemäß durch die Merkmale in dem Kennzeichen des Patentanspruchs 1 **gelöst.** Hierbei wird ein Bauteil, welches bereits für das Meßsystem benötigt wird, derart betrieben, daß es sich erwärmt und dabei der momentane Temperaturkoeffizient gemessen wird oder eine definierte Betriebstemperatur erreicht wird oder ein temperaturunabhängiger Betriebspunkt eingestellt wird. Die Grundidee hierbei ist ein Verfahren zur Temperaturkompensation aufzuzeigen, welches keine externen Bauelemente benötigt, deren einzige Funktion es ist den Temperatureffekt zu kompensieren, sondern bereits vorhandene Bauelemente, die im Gerät oder der Meßeinrichtung auch andere Funktionen übernehmen, zur Erwärmung oder zur Betriebspunkteinstellung zu nutzen.

Die mit der Erfindung erzielten **Vorteile** liegen darin, daß keine zusätzlichen Bauteile benötigt werden, die im wesentlichen nur dazu dienen, das System zu erwärmen oder auf einen günstigen Betriebspunkt zu setzen. Dieses Verfahren nutzt die Tatsache, daß die temperaturempfindlichen Komponenten selbst oder benachbarte elektronische Bauteile, die bereits für das Meßsystem benötigt werden, diese Funktion übernehmen. Dadurch kann zum Beispiel im Falle einer Erwärmung die benötigte Wärmemenge schnell und verlustfrei an die temperaturempfindliche Komponente gelangen. Im Falle einer Erwärmung kann diese sehr schnell, verlustarm und gezielt realisiert werden.

Weitere vorteilhafte Weiterbildungen ergeben sich aus den Unteransprüchen. Hier werden Vorrichtungen und Verfahren aufgezeigt bei denen die temperaturempfindliche Komponente in seiner Hauptfunktion ein Aktor oder ein Sensor ist. Beim Heizvorgang würden sie jedoch als Heizelement und evtl. zugleich als Temperatursensor benutzt. Im speziellen Fall kann es sich hierbei um eine Licht emittierende Diode oder einen Licht empfindlichen Empfänger oder Fotowiderstand handeln. Hierbei kann es sich sowohl um thermisch gering gekoppelte als auch um thermisch gut gekoppelte Systeme handeln, wie es bei einem anderen vorteilhaften Verfahren beschrieben wird. Dabei wird ein temperaturempfindlicher Drucksensor durch seine Widerstände oder Dioden erwärmt, die zwischen dem eigentlichen Meßvorgang derart betrieben werden, daß sie die nötige Wärmemenge dem System zuführen.

Im folgenden soll das Verfahren anhand von **Ausführungsbeispielen** im Zusammenhang mit den Figuren dargestellt und erläutert werden.

| Figur 1: | Ablaufdiagramm zur Bestimmung des momentanen Temperaturkoeffizienten. |
|---|---|
| Figur 2: | Ablaufdiagramm zur Erwärmung auf eine feste Betriebstemperatur, welche durch eine umgebungstemperaturabhängige Zufuhr von Energie erreicht wird |
| Figur 3: | Ablaufdiagramm zur Erwärmung auf eine feste Betriebstemperatur, welche durch Zufuhr von Energie erreicht wird, die von einer temperaturabhängige Ersatzgröße der Komponente gesteuert wird |
| Figur 4: | Ablaufdiagramm zur Erwärmung auf eine feste Betriebstemperatur, welche durch eine komponententemperaturabhängigen Zufuhr von Energie erreicht wird |
| Figur 5: | Ablaufdiagramm zur Bestimmung eines Betriebspunktes mit minimaler Temperaturabhängigkeit |
| Figur 6: | Temperaturgang eines Fotowiderstandes |
| Figur 7: | Extinktionssensor |
| Figur 8: | Drucksensor |
| Figur 9: | Ersatzschaltbild eines Drucksensors mit überbrückter Substratdiode |

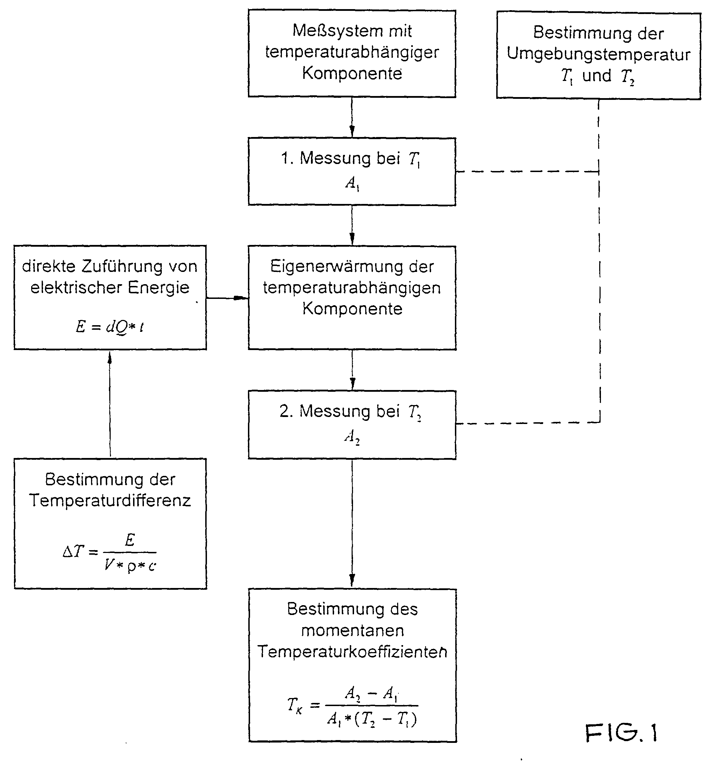

**Figur 1** zeigt einen Ablaufplan zur Bestimmung des momentanen Temperaturkoeffizienten. Ein Meßsystem, welches auch Teil eines Gerätes sein kann, beinhaltet ein oder mehrere temperaturabhängige Komponenten. Werden keine Verfahren für die Temperaturkompensation angewendet, kann durch die temperaturabhängige Komponente das Meßergebnis verfälscht werden, da sie dazu beiträgt, daß bei unterschiedlichen Temperaturen unterschiedliche Ergebnisse erzielt werden. Zur Temperaturkompensation wird im dargestellten Fall der momentane Temperaturkoeffizient bestimmt. Hierbei wird mit dem Meßsystem bei einer ersten sogenannten Kompensationsmessung unter bestimmten Betriebsbedingungen, das heißt bei einer bestimmten Temperatur $T_1$ und bestimmten Meßparameter ein Wert $A_1$ ermittelt. Darauf wird die temperaturabhängige Komponente derart betrieben, daß sie sich auf die Temperatur $T_2$ erwärmt. Dies geschieht indem ihr elektrische Energie in Form von Strom und Spannung zugeführt wird. Es gilt: $E = dQ*t = dU*dI*t$. Das bedeutet, daß die temperaturabhängige Komponente, die zum Beispiel aus einer Licht emittierenden Diode, einer Fotodiode oder Fototransistor, einem Transistor, einer Zenerdiode, einem Fotowiderstand oder einem Widerstand oder einem anderen Bauteil, welches so betrieben werden kann, daß es sich erwärmt, besteht oder sich in unmittelbarer Nähe eines solchen Bauteils befindet, sich selbst aufheizt oder von einem benachbarten Bauteil aufgeheizt wird. Hierbei hat das benachbarte Bauteil, welches die temperaturabhängige Komponente erwärmt auch eine andere Funktion wie ausschließlich die Erwärmung in dem Gerät oder dem Meßsystem einzunehmen, da sonst der kostensparende Effekt nicht mehr relevant wäre. Dieses benachbarte Bauteil muß für das Meßsystem oder das Gerät auch ohne Temperaturkompensation von Nutzen sein. Nach der Erwärmung hat die temperaturabhängige Komponente eine Temperatur von $T_2$. Bei dieser Temperatur $T_2$ wird bei sonst gleichen Betriebsbedingungen ein zweiter Meßwert $A_2$ ermittelt. Ergänzend sei hinzugefügt, daß die Komponente nicht temperaturabhängig wäre, wenn das Meßsystem $A_1 = A_2$ mißt. Da dies aber in aller Regel nicht der Fall ist muß für die Temperaturkompensation der Temperaturkoeffizient bestimmt werden. Der Temperaturkoeffizient gibt an, um welchen Wert der Meßwert pro Kelvin verändert werden muß. Hierbei kann der Temperaturkoeffizient sowohl über den gesamten Temperaturbereich konstant sein oder sich je nach den jeweiligen Betriebsbedingungen verändern. Im ersten Fall wäre dann eine einmalige Messung und Abspeicherung des Temperaturkoeffizienten ausreichend. Im zweiten Fall jedoch müßte der Temperaturkoeffizient unter verschiedensten Betriebsbedingungen ermittelt und abgespeichert werden, so daß der genaue Wert abhängig von den jeweiligen Betriebsbedingung unter denen eine Messung erfolgt immer zur Verfügung steht. Der Temperaturkoeffizient ergibt sich aus

$$T_K = \frac{A_2 \ A_1}{A_1 * (T_2 - T_1)}.$$

Die Werte $A_1$ und $A_2$ sind bekannt. Wie in Figur 1 dargestellt, läßt sich die Temperaturdifferenz $\Delta T = T_2 - T_1$ auf verschiedene Arten ermitteln. Die Bedeutung der gestrichelten Linie ist, daß die Temperatur bei der 1. und 2. Kompensationsmessung erfaßt und dann erst die Differenz gebildet wird. Unter der Vorraussetzung, daß die Wärmeleitung in der Umgebung gering ist, besteht eine andere Möglichkeit darin, daß die Temperaturdifferenz aus

$$\Delta T = \frac{E}{V * \rho * c}$$

berechnet wird, wobei $E=dU*dI*t$ die zugeführte elektrische Energie ist, $V$ das Volumen insbesondere die Chipgröße, p die Dichte und c die spezifische Wärmekapazität der Komponente ist. Mit den nun bekannten Werten läßt sich der Temperaturkoeffizient $T_K$ berechnen. Diese Messungen zur Bestimmung des Temperaturkoeffizienten lassen sich auch unter verschiedensten Betriebsbedingungen beliebig wiederholen, so daß bei allen Betriebsbedingungen der Temperaturkoeffizient bekannt ist. Bei der tatsächlichen Messung, also bei der Erfassung der gewünschten Meßgröße, wie z.B. Druck, Verschmutzungsgrad kann der tatsächlich bei einer Temperatur $T$ gemessene Meßwert $M$ mit Hilfe des Temperaturkoeffizienten $T_K$ auf den richtigen, temperaturkompensierten, also bei einer Standardtemperatur $T_0$ eigentlich ermittelten Wert $K$ korrigiert werden. Es gilt: $K = M*(1+T_K*(T-T_0))$. Diese auf die Standardtemperatur korrigierten Werte erlauben dann eine zuverlässige Aussage und diese können auch miteinander verglichen werden.

Diese Mesungen zur Bestimmung des Temperaturkoeffizienten können sowohl vor als auch während des Betriebs erfolgen. Auch sind sie jederzeit im Gerät oder im Meßsystem wiederholbar, so daß Langzeiteffekte, die den Temperaturkoeffizienten verändern rechnerisch eliminiert werden können. Bei diesem Verfahren werden für die Kompensationsmessungen keine zusätzlichen Bauteile benötigt und es kann sogar die Temperaturdifferenz berechnet werden. Dieses Verfahren ermöglicht es, günstige Komponenten zum Einsatz zu bringen, deren Temperaturempfindlichkeit eine große Streubreite besitzt und über die Zeit eine hohe Degradation aufweisen, und dabei gleichzeitig eine hohe Meßgenauigkeit zu gewährleisten. Die Kompensationsmessungen werden immer nur zu den Zeiten erfolgen an denen keine tatsächlichen Messungen erfolgen.

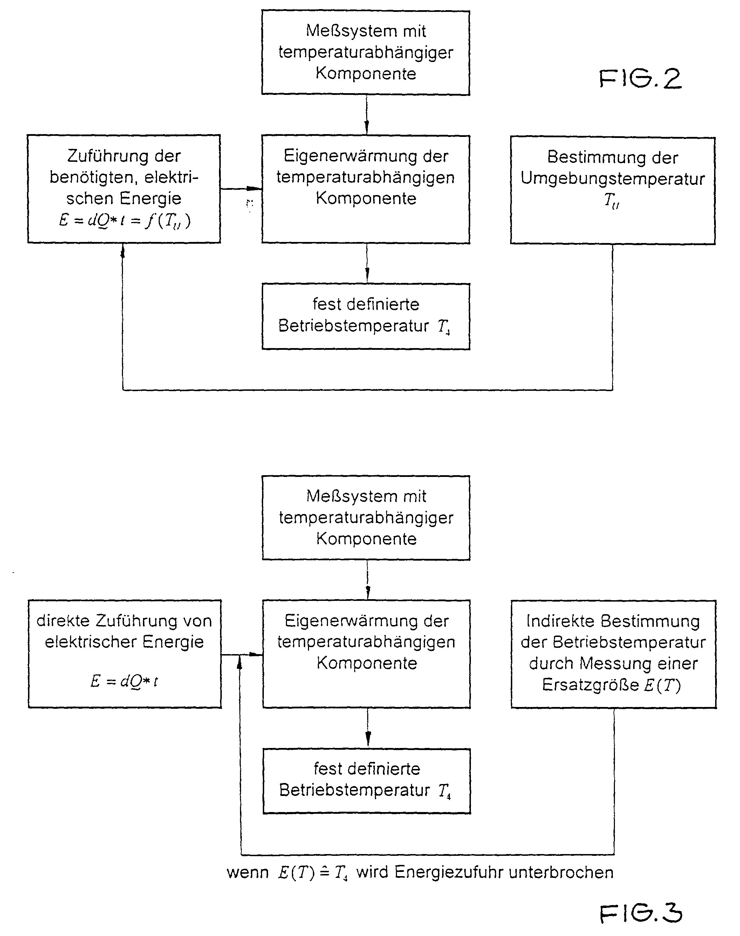

**Figur 2** zeigt einen Ablaufplan zur Erzielung einer konstanten, fest definierten Betriebstemperatur. Ein Meßsystem, welches auch Teil eines Gerätes sein kann, beinhaltet ein oder mehrere temperaturabhängige Komponenten. Werden keine Verfahren für die Temperaturkompensation angewendet, kann durch die temperaturabhängige Komponente das Meßergebnis verfälscht werden, da sie dazu beiträgt, daß bei unterschiedlichen Temperaturen, aber sonst gleichen Betriebsbedingungen unterschiedliche Ergebnisse erzielt werden. Zur Temperaturkompensation wird im dargestellten Fall einfach die Betriebstemperatur der temperaturempfindlichen Komponente auf einen konstanten Wert gehalten. Hierbei wird im Meßsystem die temperaturempfindliche Komponente, bzw. ein direkt benachbartes Bauteil so betrieben, daß sich die temperaturempfindliche Komponente auf eine fest definierte Betriebstemperatur $T_4$ erwärmt, die so hoch gewählt ist, daß die Umgebungstemperatur $T_U$ keine Veränderung hervorruft. Hierbei wird die temperaturempfindliche Komponente vor der eigentlichen Messung derart betrieben, daß sie sich auf die Temperatur $T_4$ erwärmt, dann wird während der Messung die Heizfunktion der Komponente unterbrochen und sie wird für die Meßfunktion genutzt. Die Energiemenge die zugeführt werden muß, um die gewünscht Betriebstemperatur zu erreichen, berechnet sich dann aus $dU*dI*t = E = (T_4 - T_u)*V*\rho*c$. Die Meßzeit ist in der Regel aber so kurz, daß keine relevante Abkühlung während der Messung erfolgt. Alle weiteren Messungen erfolgen nach dem gleichen Verfahren, so daß sie bei der gleichen Betriebstemperatur stattfinden.

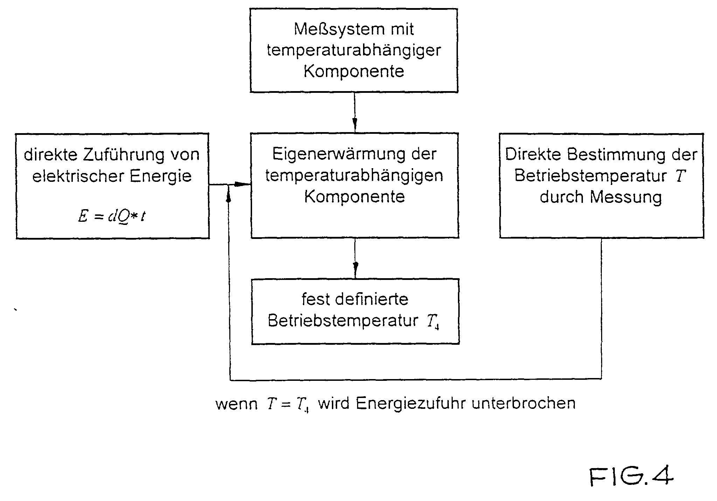

**Figur 3** zeigt einen Ablaufplan zur Erzielung einer konstanten, fest definierten Betriebstemperatur wie bereits in Figur 2 beschrieben. Jedoch wird in diesem Anwendungsbeispiel die Energie, die zur Erzielung der gewünschten Betriebstemperatur $T_4$ benötigt wird, nicht berechnet, sondern es erfolgt eine indirekte Messung der Betriebstemperatur $T$. Ist die gewünschte Betriebstemperatur $T_4$ erreicht, wird die Energiezufuhr unterbrochen. Zur Messung der momentanen Betriebstemperatur $T$ der Komponente dient eine temperaturempfindliche Größe $E(T)$, wie zum Beispiel die Flußspannung einer Diode, der temperaturempfindlichen Komponente. Der gemessene Wert dieser Größe entspricht einer ganz bestimmten Temperatur der Komponente, so daß dies eine indirekte Messung der Betriebstemperatur $T$ darstellt. Entspricht der gemessene Wert der Größe der gewünschten Betriebstemperatur $T_4$, so wird die Energiezufuhr gestoppt. Dann kann die Komponente für die eigentliche Meßfunktion genutzt werden. Die Meßzeit ist in der Regel so kurz, daß keine relevante Abkühlung während der Messung erfolgt. Alle weiteren Messungen erfolgen nach dem gleichen Verfahren, so daß sie bei der gleichen Betriebstemperatur stattfinden.

**Figur 4** zeigt einen Ablaufplan zur Erzielung einer konstanten, fest definierten Betriebstemperatur wie bereits in Figur 2 beschrieben. Jedoch wird in diesem Anwendungsbeispiel die Energie, die zur Erzielung der gewünschten Betriebstemperatur $T_4$ benötigt wird, nicht vorab berechnet, sondern es erfolgt eine direkte Messung der Betriebstemperatur $T$. Ist die gewünschte Betriebstemperatur $T_4$ erreicht, wird die Energiezufuhr unterbrochen. Zur Messung der momentanen Betriebstemperatur $T$ der Komponente dient hier, im Gegensatz zu dem in Figur 3 beschriebenen Anwendungsbeispiel, nicht die Komponente selbst, sondern ein Temperatursensor. Ist die gewünschten Betriebstemperatur $T_4$ erreicht, so wird auch hier die Energiezufuhr unterbrochen. Dann kann die Komponente für die eigentliche Meßfunktion genutzt werden. Die Meßzeit ist in der Regel so kurz, daß keine relevante Abkühlung während der Messung erfolgt. Alle weiteren Messungen erfolgen nach dem gleichen Verfahren, so daß sie bei der gleichen Betriebstemperatur stattfinden.

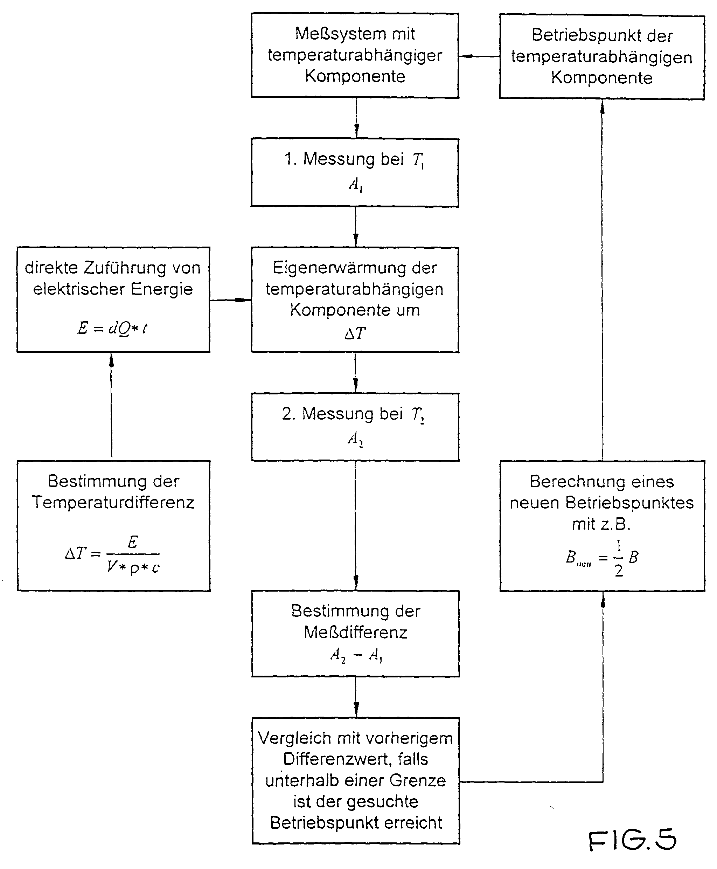

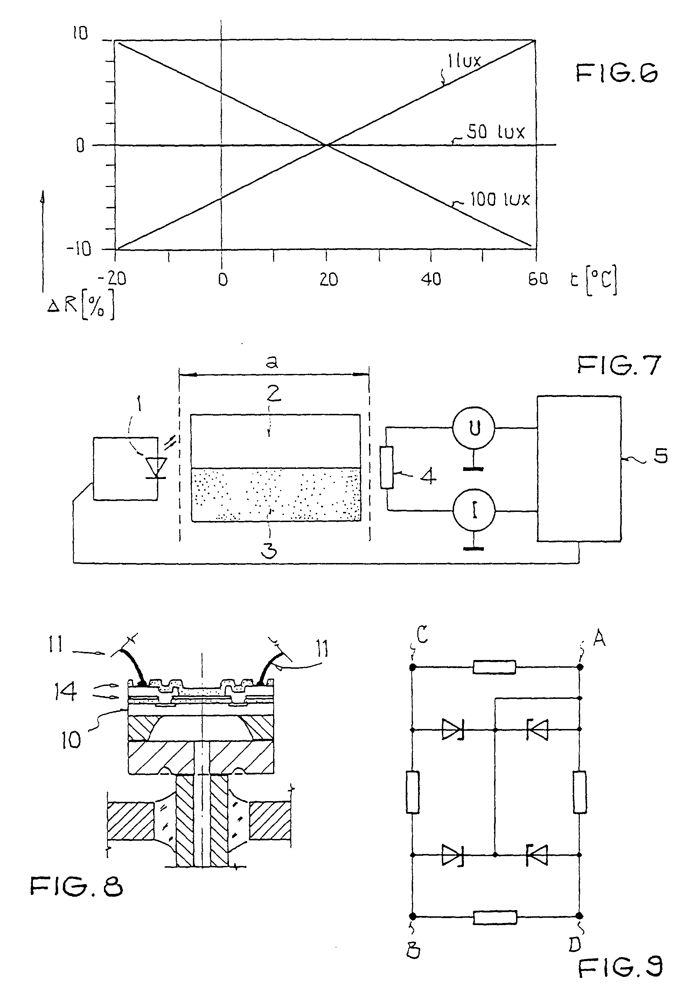

**Figur 5** zeigt einen Ablaufplan zur Bestimmung eines temperaturunabhängigen Betriebspunktes. Ein Meßsystem, welches auch Teil eines Gerätes sein kann, beinhaltet ein oder mehrere temperaturabhängige Komponenten. Werden keine Verfahren für die Temperaturkompensation angewendet, kann durch die temperaturabhängige Komponente das Meßergebnis verfälscht werden, da sie dazu beiträgt, daß bei unterschiedlichen Temperaturen unterschiedliche Ergebnisse erzielt werden. Zur Temperaturkompensation wird im dargestellten Fall ein temperaturunabhängiger Betriebspunkt ermittelt. Ein derartiges Verhalten haben z. B. Fotowiderstände deren Temperaturkoeffizient im einen Strahlungsbereich positiv und im anderen Strahlungsbereich negativ ist. Dieser Sachverhalt ist in Figur 6 dargestellt. In Figur 5 wird bei einer ersten Versuchsmessung der Wert $A_1$ bei einer Temperatur $T_1$ unter bestimmten Betriebsbedingungen $B$ ermittelt. Daraufhin wird die temperaturabhängige Komponente derart betrieben, daß sie sich auf die Temperatur $T_2$ erwärmt. Dies geschieht, indem ihr elektrische Energie zugeführt wird. Unter Beibehaltung der Betriebsbedingungen $B$ wird eine zweite Versuchsmessung vorgenommen. Ergeben sich für $A_1$ und $A_2$ unterschiedliche Werte, so wird die Meßdifferenz von $\Delta A = A_2 - A_1$ erfaßt. Daraufhin wird dieser Meßvorgang wiederholt. Die sich bei den Messungen ergebende Temperaturdifferenz $\Delta T = T_2 - T_1$ zwischen den beiden Messungen wird beibehalten und ein neuer Betriebspunkt z.B. $B_{neu} = \frac{1}{2}B$ gewählt. Für diesen Betriebspunkt ergibt sich wiederum eine Versuchsmeßdifferenz von $\Delta \bar{A} = A_4 - A_3$. Dann wird dieser Differenzwert mit dem vorherigen verglichen und der Vorgang also die Änderung der Betriebsbedingung so oft wiederholt bis der Differenzwert sich minimal oder nicht mehr verändert und somit $\Delta \bar{A} = \Delta A$ ist. Ist dieser Wert erreicht, so ist der temperaturunabhängige Betriebspunkt gefunden.

**Figur 6** zeigt den Temperaturgang eines Fotowiderstandes. Bezugnehmend auf die Ausführung wie sie unter Figur 3 beschrieben wurde, ist bei einem Betriebspunkt, in diesem Falle einer Strahlungsleistung von $B \approx 50$ *lux* der Fotowiderstand temperaturunabhängig. Hingegen hätte er bei einer Bestrahlungsstärke von $B \approx 1$ *lux* einen positiven und bei einer Bestrahlungsstärke von $B \approx 100$ *lux* einen negativen Temperaturkoeffizienten.

**Figur 7** zeigt einen Extinktionssensor bei einer Waschmaschine. Hier sendet als Aktor eine lichtemittierende Diode **1** eine Strahlung aus. Die Strahlung geht bei der Kompensationsmessung über eine Meßstrecke a durch ein klares Medium **2** hindurch. Bei der Extinktionsmessung ist in der Regel das Medium verschmutzt **3** und die Strahlung wird je nach Verunreinigungsgrad auf der Meßstrecke a abgeschwächt. Die reduzierte Strahlungsleistung tritt dann auf einen Fotowiderstand **4,** der dann bei einer angelegten Spannung **U** einen zur Strahlung proportionalen Strom **I** erzeugt. Bei diesem System ist die lichtemittierende Diode **1** und der Fotowiderstand **4** temperaturabhängig. Dies ist vor allem dann relevant wenn die Waschlauge erwärmt wird und die Messungen bei verschiedenen Laugentemperaturen erfolgen. Um die Temperaturabhängigkeit der lichtemittierenden Diode **1** zu kompensieren wird vor der eigentlichen Extinktionsmessung die Kompensationsmessung bei klarer Meßstrecke a vorgenommen. Hierbei wird die lichtemittierende Diode **1** mit einem erhöhten Strom und/oder einer erhöhten Spannung betrieben, so daß sie sich selbst erwärmt. Dabei wird vor und nach der Erwärmung ein Meßwert, in diesem Fall der Strom des Fotowiderstandes ermittelt, und dann, wie unter Figur 1 beschrieben, der momentane Temperaturkoeffizient bestimmt. Danach wird auch der Fotowiderstand **4** vor der eigentlichen Messung mit erhöhten Werten betrieben indem z.B. die einfallende Strahlungsmenge erhöht wird und sich dadurch die Leistung im Fotowiderstand erhöht und eine Erwärmung stattfindet. Auch hier wird vor und nach der Erwärmung ein Meßwert also der resultierende Strom ermittelt und wie unter Figur 1 beschrieben der Temperaturkoeffizient berechnet. Sind die Temperaturkoeffizienten bekannt, erfolgt die eigentliche Messung und die Korrekturberechnung im Mikroprozessor **5** wie bereits beschrieben. Im Falle des Fotowiderstandes **4** kann auch ein alternatives Verfahren, wie unter Figur 3 und 4 beschrieben, angewendet werden. Hierbei wird der Betriebspunkt, in diesem Fall die Strahlungsstärke, so lange verändert bis der Fotowiderstand temperaturunempfindlich wird. Im Anwendungsfall liegt dieser Betriebspunkt bei $B = 50$ *lux*.

**Figur 8** zeigt einen Drucksensor wie sie z.B. im Kfz-Bereich verwendet werden. Ein wesentlicher Bestandteil dieses Drucksensors ist die Si-Epitaxieschicht **10** die als Membran dient. Die Eigenschaften dieser Membran sind temperaturabhängig. Auch befinden sich auf der Membran in den oberen Schichten **14** weitere temperaturabhängige elektronische Komponenten wie Widerstände einer Wheatstonschen Brücke, Pseudo Hall Widerstände oder parasitäre Elemente, wie z.B. die durch pn-Übergänge isolierten Widerstände, welche in Flußrichtung als Dioden wirken. Über die Zuleitungen **11** kann vor einer Messung ein solches elektronisches Bauteil durch einen erhöhten Stromfluß oder über die angelegte Spannung erwärmt werden. Diese Erwärmung wirkt auch auf die Membran **10**, die sich direkt unter dem Bauteil befindet. Die Energiezufuhr wird so lange aufrechterhalten bis Bauteile und Membran eine definierte Betriebstemperatur erreichen, welche z.B. über eine temperaturabhängige Größe der Komponente bestimmt wird. Dann wird die Energiezufuhr unterbrochen und das System für die Messung genutzt wie unter Figur 2, 3 und 4 beschrieben. Von Vorteil ist hierbei, daß die Messungen immer unter den gleichen thermischen Betriebsbedingungen stattfinden, ohne daß zusätzliche Vorrichtungen notwendig sind. Äquivalentes gilt für einen Magnetfeldsensor, der hier nicht abgebildet ist.

**Figur 9** zeigt ein Ersatzschaltbild eines Drucksensors mit überbrückter Substratdiode am Pluspol. Wird am Punkt A der Pluspol und am Punkt B der Minuspol angelegt, so arbeitet diese bekannte Vorrichtung im Meßbetrieb. Wird jedoch am Punkt A der Minuspol und am Punkt B der Pluspol angelegt und befinden sich die Punkte C und D auch auf einem positiven Potential ist die Vorrichtung für den Heizbetrieb zu gebrauchen. Dadurch ist es möglich mit ein und demselben Bauteil mehrere Funktionen zu realisieren, wobei das Umschalten von Meßbetreib auf Heizbetrieb sehr einfach und schnell vonstatten geht.

Ein weiteres Anwendungsbeispiel, welches nicht abgebildet ist, stellt einen chemischen Sensor dar. Hier dient bei einem Dual/Multi-Gate MOS-FET ein Gate zur Sensierung von chemischen Sustanzen und das andere Gate für das Heizen des FETs. oder wenn ein MOS-FET mit Substratdiode ausgestattet ist, dann wird die Diode vor oder während der Messung so betrieben, daß sie zum Aufheizen des FETs mittels Temperaturbestimmung durch Messung der Flußspannung auf eine definierte Betriebstemperatur dient und anschließend der Meßwert vom FET übernommen wird.

**Patentansprüche**

1. Verfahren zur Temperaturkompensation bei Meßsystemen die abhängig von der Betriebstemperatur sind und deren Temperaturabhängigkeit durch ein oder mehrere temperaturempfindliche Komponenten mit einem Temperaturkoeffizienten verursacht wird, die elektronisch betrieben werden können oder die mit einem benachbarten, elektronisch ansteuerbaren Bauteil, welches bereits für das Meßsystem benötigt wird, in thermischer Verbindung stehen, **dadurch gekennzeichnet, daß** bei diesem Verfahren die temperaturempfindliche Komponente selbst oder das benachbarte Bauteil während einer zeitlich begrenzten Dauer auch als Heizquelle verwendet wird und durch die gezielte Eigenerwärmung entweder

   - zur Temperaturkompensation der Temperaturkoeffizient der temperaturempfindlichen Komponente ermittelt wird oder

   - die temperaturempfindliche Komponente auf einer konstanten Betriebstemperatur gehalten wird oder

   - ein temperaturunempfindlicher Betriebspunkt der temperaturempfindlichen Komponente eingestellt wird

2. Vorrichtung für ein Verfahren nach Patentanspruch 1 **dadurch gekennzeichnet, daß**

   - die temperaturempfindliche Komponente ein Aktor ist, der ein elektrisches Signal in ein nicht elektrisches Signal umwandelt oder

   - die temperaturempfindliche Komponente ein Sensor ist, der ein nicht elektrisches Signal in ein elektrisches Signal umwandelt.

3. Vorrichtung für ein Verfahren nach Patentanspruch 1 **dadurch gekennzeichnet, daß** die temperaturempfindliche Komponente aus

   - einer lichtemittierenden Diode, die ein elektrisches Signal in ein Lichtoder Strahlungssignal umwandelt, insbesondere eine Leuchtdiode oder ein Laser oder

   - einem lichtempfindlichen Empfänger, der ein Licht- oder Strahlungssignal in ein elektrisches Signal umwandelt, insbesondere ein Fotowiderstand oder Fotodetektor, besteht.

4. Vorrichtung für ein Verfahren nach Patentanspruch 2, **dadurch gekennzeichnet, daß** vor und nach der Erwärmung eine Messung des Sensorsignales zur Bestimmung des momentanen Temperaturkoeffizienten des Aktors oder Sensors durchgeführt wird.

5. Verfahren nach Patentanspruch 1, **dadurch gekennzeichnet, daß**

   - die Einstellung des temperaturunempfindlichen Betriebspunktes dadurch erfolgt, indem der Temperaturkoeffizient unter verschiedenen Betriebsbedingungen solange gemessen wird bis ein Vorzeichenwechsel oder ein Minimum des Temperaturkoeffizienten stattfindet und diese temperaturunempfindlichen Betriebsbedingungen dann abgespeichert werden.

6. Vorrichtung nach Patentanspruch 3, **dadurch gekennzeichnet, daß** die temperaturempfindliche Komponente ein Drucksensor oder Magnetfeldsensor ist,

   - welcher einen oder mehrere Widerstände, insbesondere in Form einer Wheatstonschen Brücke oder eines Hall oder Pseudo-Hall empfindlichen Widerstandes, oder

   - eine oder mehrere Substratdioden beinhaltet und

   - dieser interne Widerstand oder die Substratdiode vor oder während der Messung zur Aufheizung und/oder Temperaturbestimmung des Druck- bzw. Magnetfeldsensors verwendet wird, wodurch der Druck-bzw. Magnetfeldsensor bei einer Messung immer die gleiche Betriebstemperatur hat.

7. Vorrichtung für ein Verfahren nach Patentanspruch 1, **dadurch gekennzeichnet, daß** die temperaturempfindliche Komponente oder das benachbarte elektronisch ansteuerbare Bauteil eine Zenerdiode ist, welche als Spannungsreferenz dient und vor der Verwendung des Referenzwertes durch Bestromung in Flußrichtung durch die Flußspannung bei gleichzeitiger Messung der Temperatur auf eine definierte Temperatur erwärmt wird.

8.  Verfahren nach Patentanspruch 1, **dadurch gekennzeichnet, daß** die Einstellung der festen Betriebstemperatur bewerkstelligt wird, indem

    -   mittels einer temperaturabhängigen Größe der Komponente indirekt die Temperatur der Komponente und somit die Betriebstemperatur ermittelt wird und bei Erreichen der Betriebstemperatur die weitere Energiezufuhr gestoppt wird oder

    -   mittels eines Temperatursensors die Temperatur der Komponente und somit die Betriebstemperatur direkt gemessen wird und bei Erreichen der gewünschten Betriebstemperatur die weitere Energiezufuhr gestoppt wird oder

    -   die Energie, die zum Erreichen der Betriebstemperatur benötigt wird, berechnet wird und der Komponente zugeführt wird.

**Claims**

1.  A method of compensating temperature in measurement systems which are dependent on the operating temperature and wherein the temperature dependence thereof is caused by one or more temperature sensitive components having a temperature coefficient, whereby said components can be operated electronically or they are in thermal contact with an adjacent electronically controllable component which is already needed for the measuring system, **characterised in that**

    -   the temperature sensitive component itself or the adjacent component is also used in this method during a time limited period as a heat source and, by means of appropriate self heating, either

    -   the temperature coefficient of the temperature sensitive component is determined for the purposes of temperature compensation or

    -   the temperature sensitive component is held at a constant operating temperature or

    -   a temperature insensitive operating point for the temperature sensitive component is set.

2.  A device for a method in accordance with Claim 1, **characterised in that**

    -   the temperature sensitive component is an actuator which converts an electrical signal into a non electrical signal or

    -   the temperature sensitive component is a sensor which converts a non electrical signal into an electrical signal.

3.  A device for a method in accordance with Claim 1, **characterised in that** the temperature sensitive component consists of

    -   a light emitting diode which converts an electrical signal into a light or radiation signal, especially a light emissive diode or a laser or

    -   a light sensitive receiver which converts a light or radiation signal into an electrical signal, especially a photoresistor or a photo detector.

4.  A device for a method in accordance with Claim 2, **characterised in that** a measurement of the sensor signal is carried out for determining the instantaneous temperature coefficient of the actuator or the sensor both before and after the heating process.

5.  A method in accordance with Claim 1, **characterised in that**

    -   the setting of the temperature sensitive operating point is effected by measuring the temperature coefficient under various operating conditions until such time as a change of prefix or a minimum value of the temperature coefficient occurs, and these temperature sensitive operating conditions are then stored.

6.  A device in accordance with Claim 3, **characterised in that** the temperature sensitive component is a pressure sensor or a magnetic field sensor,

    -   which includes one or more resistors, especially in the form of a Wheatstone bridge or a Hall effect or a pseudo Hall effect sensitive resistor, or

    -   one or more substrate diodes and

    -   this internal resistance or the substrate diode is used prior to or during the measurement for heating purposes and/or for determining the temperature of the pressure or magnetic field sensor, whereby the pressure or magnetic field sensor always has the same operating temperature during a measurement.

7.  A device for a method in accordance with Claim 1, **characterised in that** the temperature sensitive component or the adjacent electronically controllable component is a Zener diode which serves as a voltage reference and which is heated up to a defined temperature prior to the use of the reference value by passing forward current therethrough by the breakdown voltage whilst simultaneously measuring the temperature.

8. A device for a method in accordance with Claim 1, **characterised in that** the setting of the fixed operating temperature is effected,

- by indirectly determining the temperature of the component and hence the operating temperature by means of a temperature dependent parameter of the component, and by stopping the further supply of energy upon reaching the operating temperature or
- the temperature of the component and hence the operating temperature is directly measured by means of a temperature sensor, and by stopping the further supply of energy upon reaching the desired operating temperature or
- the energy needed for reaching the operating temperature is calculated and supplied to the component.

**Revendications**

1. Procédé de compensation de température dans des systèmes de mesure, qui dépendent de la température de fonctionnement et dont la dépendance vis-à-vis de la température est due à un ou plusieurs composants sensibles à la température, qui possèdent un coefficient de température et qui peuvent fonctionner électroniquement ou bien sont reliés thermiquement à un élément de circuit voisin pouvant être commandé électroniquement et qui est déjà nécessaire pour le système de mesure, **caractérisé en ce que** dans ce procédé les composants sensibles à la température eux-mêmes ou l'élément de circuit voisin sont également utilisés en tant que source de chaleur pendant une durée limitée dans le temps, et sous l'effet de l'échauffement propre ciblé,

- le coefficient de température des composants sensibles à la température est déterminé pour la compensation de température, ou
- le composant sensible à la température est maintenu à une température constante de fonctionnement, ou
- un point de fonctionnement, qui est insensible à la température, du composant sensible à la température est réglé.

2. Dispositif pour un procédé selon la revendication 1, **caractérisé en ce que**

- le composant sensible à la température est un actionneur, qui convertit un signal électrique en un signal non électrique, ou
- le composant sensible à la température est un capteur qui convertit un signal non électrique en un signal électrique.

3. Dispositif pour un procédé selon la revendication 1, **caractérisé en ce que** le composant sensible à la température est constitué par

- une diode photoémissive, qui convertit un signal électrique en un signal lumineux ou un signal de rayonnement, notamment une diode à luminescence ou un laser, ou
- un récepteur photosensible, qui convertit un signal lumineux ou un signal de rayonnement en un signal électrique, notamment une photorésistance ou un photodétecteur.

4. Dispositif pour un procédé selon la revendication 2, **caractérisé en ce qu'**avant ou après l'échauffement, on exécute une mesure du signal de capteur pour déterminer le coefficient de température instantané de l'actionneur ou du capteur.

5. Dispositif pour un procédé selon la revendication 1, **caractérisé en ce que**

- le réglage du point de fonctionnement insensible à la température est réalisé par le fait que le coefficient de température est mesuré dans différentes conditions de fonctionnement jusqu'à ce qu'un changement de signe ou un minimum du coefficient de température apparaisse et que ces conditions de fonctionnement insensibles à la température sont alors mémorisées.

6. Dispositif selon la revendication 3, **caractérisé en ce que** le composant sensible à la température est un capteur de pression ou un capteur de champ magnétique,

- qui contient une ou plusieurs résistances, notamment sous la forme d'un pont de Wheatstone ou d'une résistance sensible de Hall ou une pseudo-résistance sensible de Hall, ou
- une ou plusieurs diodes de substrat, et
- cette résistance interne ou la diode de substrat est utilisée avant ou pendant la mesure pour le chauffage et/ou la détermination de la température du capteur de pression et du capteur de champ magnétique, ce qui a pour effet que le capteur de champ magnétique possède, lors d'une mesure, toujours la même température de fonctionnement.

7. Dispositif pour le procédé selon la revendication 1, **caractérisé en ce que** le composant sensible à la température ou l'élément de circuit voisin commandable électroniquement est une diode Zener, qui sert de référence de tension et est chauffé à une température définie avant l'utilisation de la valeur de référence, par circulation d'un courant dans le sens du flux sous l'effet de la tension de flux lors d'une mesure simultanée de la température.

8. Procédé selon la revendication 1, **caractérisé en ce que** le réglage de la température fixe de fonctionnement est réalisé par le fait

   - qu'on détermine indirectement, à l'aide d'une grandeur du composant, qui dépend de la température, la température du composant et par conséquent la température de fonctionnement et que, lorsque la température de fonctionnement est atteinte, on arrête la poursuite de l'apport d'énergie, ou
   - on mesure directement, à l'aide d'un capteur de température, la température du composant et par conséquent la température de fonctionnement et, lorsque la température de fonctionnement désirée est atteinte, on arrête la poursuite de l'apport d'énergie, ou
   - on calcule l'énergie, qui est nécessaire pour atteindre la température de fonctionnement, et on l'envoie au composant.

$$\begin{array}{ccc}
\boxed{\begin{array}{c}\text{Meßsystem mit}\\\text{temperaturabhängiger}\\\text{Komponente}\end{array}} & & \boxed{\begin{array}{c}\text{Bestimmung der}\\\text{Umgebungstemperatur}\\T_1 \text{ und } T_2\end{array}}
\end{array}$$

$$\boxed{\begin{array}{c}\text{1. Messung bei } T_1\\A_1\end{array}}$$

$$\begin{array}{ccc}
\boxed{\begin{array}{c}\text{direkte Zuführung von}\\\text{elektrischer Energie}\\\\E = dQ * t\end{array}} & \rightarrow & \boxed{\begin{array}{c}\text{Eigenerwärmung der}\\\text{temperaturabhängigen}\\\text{Komponente}\end{array}}
\end{array}$$

$$\boxed{\begin{array}{c}\text{2. Messung bei } T_2\\A_2\end{array}}$$

$$\boxed{\begin{array}{c}\text{Bestimmung der}\\\text{Temperaturdifferenz}\\\\\Delta T = \dfrac{E}{V * \rho * c}\end{array}}$$

$$\boxed{\begin{array}{c}\text{Bestimmung des}\\\text{momentanen}\\\text{Temperaturkoeffizienten}\\\\T_K = \dfrac{A_2 - A_1}{A_1 * (T_2 - T_1)}\end{array}}$$

FIG. 1

10

FIG.2

```
┌─────────────────────────┐
│      Meßsystem mit      │
│   temperaturabhängiger   │
│       Komponente         │
└─────────────────────────┘
```

```
┌─────────────────────────┐   t   ┌─────────────────────────┐        ┌─────────────────────────┐
│     Zuführung der       │──────▶│   Eigenerwärmung der    │        │    Bestimmung der        │
│   benötigten, elektri-   │       │  temperaturabhängigen    │        │   Umgebungstemperatur    │
│     schen Energie        │       │       Komponente         │        │          $T_U$           │
│  $E = dQ*t = f(T_U)$     │       │                          │        │                          │
└─────────────────────────┘       └─────────────────────────┘        └─────────────────────────┘
```

```
┌─────────────────────────┐
│     fest definierte      │
│  Betriebstemperatur $T_4$│
└─────────────────────────┘
```

```
┌─────────────────────────┐
│      Meßsystem mit      │
│   temperaturabhängiger   │
│       Komponente         │
└─────────────────────────┘
```

```
┌─────────────────────────┐       ┌─────────────────────────┐        ┌─────────────────────────┐
│  direkte Zuführung von   │       │   Eigenerwärmung der    │        │   Indirekte Bestimmung   │
│   elektrischer Energie   │       │  temperaturabhängigen    │        │  der Betriebstemperatur  │
│                          │       │       Komponente         │        │    durch Messung einer   │
│        $E = dQ*t$        │       │                          │        │   Ersatzgröße $E(T)$     │
└─────────────────────────┘       └─────────────────────────┘        └─────────────────────────┘
```

```
┌─────────────────────────┐
│     fest definierte      │
│  Betriebstemperatur $T_4$│
└─────────────────────────┘
```

wenn $E(T) \hat{=} T_4$ wird Energiezufuhr unterbrochen

FIG.3

Meßsystem mit
temperaturabhängiger
Komponente

direkte Zuführung von
elektrischer Energie

$$E = dQ * t$$

Eigenerwärmung der
temperaturabhängigen
Komponente

Direkte Bestimmung der
Betriebstemperatur $T$
durch Messung

fest definierte
Betriebstemperatur $T_4$

wenn $T = T_4$ wird Energiezufuhr unterbrochen

FIG.4

Meßsystem mit temperaturabhängiger Komponente

Betriebspunkt der temperaturabhängigen Komponente

1. Messung bei $T_1$
$A_1$

direkte Zuführung von elektrischer Energie

$$E = dQ * t$$

Eigenerwärmung der temperaturabhängigen Komponente um $\Delta T$

2. Messung bei $T_2$
$A_2$

Bestimmung der Temperaturdifferenz

$$\Delta T = \frac{E}{V * \rho * c}$$

Berechnung eines neuen Betriebspunktes mit z.B.

$$B_{neu} = \frac{1}{2} B$$

Bestimmung der Meßdifferenz
$A_2 - A_1$

Vergleich mit vorherigem Differenzwert, falls unterhalb einer Grenze ist der gesuchte Betriebspunkt erreicht

FIG.5

FIG.6

FIG.7

FIG.8

FIG.9